# EUROPEAN PATENT APPLICATION

(11) **EP 1 389 029 A1**
(43) Date of publication of application: **11.02.2004**
(21) Application number: 02360226.1
(22) Date of filing: 30.07.2002
(51) Int. Cl.: H04Q 11/04, H04M 11/06, H04Q 3/58

(54) **A DSL access system, a central DSL termination unit, and a remote DSL termination unit realising a DSLAM**

(71) Applicant: ALCATEL, 75008 Paris (FR)
(72) Inventor: Bürkle, Heinz-Peter, 73630 Remshalden (DE); Krimmel, Heinz-Georg, 70825 Korntal-Münchingen (DE); Peeters, Ronny, 2020 Antwerpen (BE)
(74) Representative: Brose, Gerhard

(57) **Abstract**

The invention relates to Digital Subscriber Line (DSL) infrastructure. More particularly, the present invention reltes to a remote Digital Subscriber Line Access Multiplexer (DSLAM) only partially hosted by a central office (CO), split into a central DSL-termination unit (DTU-C) hosted at CO and a remote DSL termination unit (DTU-R), where the DTU-R comprises an analog front end AFE for each DSL line, a multiplexer/de-multiplexer unit DeMux2, and a transmission network interface A4'. The DTU-C comprises correspondingly a transmission network interface, a multiplexer/de-multiplexer unit Mux, a digital back end Dig for each DSL line. The invention is heavily based on digital signal processing techniques.

## Description

### BACKGROUND OF THE INVENTION

### Field of the Invention

The present invention relates to Digital Subscriber Line (DSL) infrastructure. More particularly, the present invention relates to a DSL Access System, a Central DSL Termination Unit, and A Remote DSL Termination Unit realizing a DSL Access Multiplexer (DSLAM).

### Background

DSL is an emerging service that offers a faster Internet connection than a standard dial-up connection. DSL technology uses existing 2-wire copper telephone wiring to deliver high-speed data services to homes and businesses.

DSL uses the existing phone line and in most cases does not require an additional phone line. This gives "always-on" Internet access and does not tie up the phone line. DSL offers speeds ranging from 144 Kbps to 1.5Mbps. This digital service can be used to deliver bandwidth-intensive applications like streaming audio/video, online games, application programs, telephone calling, video conferencing and other high-bandwidth services.

Today DSL is for the first time putting high-speed Internet access within the reach of the home, small and medium-size businesses. DSL takes existing voice cables that connect customer premises to the phone company's CO and turns them into a high-speed digital link.

The variation called Asymmetric DSL (ADSL) is the form of DSL that will become most familiar to home and small business users. ADSL is called "asymmetric" because most of its two-way or duplex bandwidth is devoted to the downstream direction, sending data to the user. Only a small portion of bandwidth is available for upstream or user-interaction messages. In many cases, your existing telephone lines will work with ADSL. In some areas, they may need upgrading.

Rockwell's Consumer DSL (CDSL) is a trademarked version of DSL that is somewhat slower than ADSL with the advantage that a "splitter" does not need to be installed at the user's end.

G.Lite, also known as DSL Lite, splitter-less ADSL, and Universal ADSL, is essentially a slower ADSL that doesn't require splitting of the line at the user end but manages to split it for the user remotely at the telephone company.

The earliest variation of DSL to be widely used has been High bit-rate DSL (HDSL) which is used for wide-band digital transmission within a corporate site and between the telephone company and a customer. The main characteristic of HDSL is that it is symmetrical: an equal amount of bandwidth is available in both directions.

Integrated Services Digital Network (ISDN) DSL (IDSL) is somewhat of a misnomer since it's really closer to ISDN data rates and service at 128 Kbps than to the much higher rates of ADSL.

Rate-Adaptive DSL (RADSL) is an ADSL technology from Westell in which software is able to determine the rate at which signals can be transmitted on a given customer phone line and adjust the delivery rate accordingly.

Single-line DSL (SDSL) is apparently the same thing as HDSL with a single line, carrying 1.544 Mbps (U.S. and Canada) or 2.048 Mbps (Europe) each direction on a duplex line.

Unidirectional DSL (UDSL) is a unidirectional version of HDSL.

Very high data rate DSL (VDSL) is a developing technology that promises much higher data rates over relatively short distances (between 51 and 55 Mbps over lines up to 1,000 feet or 300 meters in length). It's envisioned that VDSL may emerge somewhat after ADSL is widely deployed and co-exist with it.

xDSL refers collectively to all such types of digital subscriber lines.

DSL technologies use sophisticated modulation schemes to pack data onto copper wires, e.g. existing copper telephone lines. They are sometimes referred to as last-mile technologies because they are used only for connections from a telephone switching station to a home or office, not between switching stations.

Modem is short for modulator-demodulator. A modem is a device or program that enables a computer to transmit data over telephone lines. Computer information is digital, whereas information transmitted over telephone lines is transmitted in the form of analog signals. It comprises mainly a digital part and an analog part.

Within both parts signal processors might be used implementing certain signal transformations. These are mainly implemented as digital components e.g. digital signaling processors (DSP), i.e. the analog signal is discretized and digitized for processing. These digitized signals are henceforth also called digital. The analog signal is a superposition of digital signal values.

Modulation is a prescribed method of encoding digital (or analog) signals on a different waveform (the carrier signal). Once encoded, the original signal may be recovered by an inverse process, demodulation. Modulation is performed to adapt the signal to a different frequency range (and medium) than that of the original signal.

The local loop is a pair of wires, moderately twisted for the entire length between the telephone company's end office and the user premises (the common telephone set) forming a loop. This loop provides a user with access to the global telecommunications infrastructure that is installed all over the world. DSL uses whatever frequencies will propagate on this line for purposes of digital data transmission.

A DSL Termination Unit - Remote (DTU-R) is a device at the end of an ADSL line that stands between the line and the first item of equipment in the subscriber's premises equipment, also called customer's premises equipment (CPE). It may be integrated within an access node.

A DSL Termination Unit - Central Office (DTU-C) is a device at the end of an ADSL line that stands between the line and the first item of equipment in the telephone switch. It may be integrated within an access node.

Asynchronous Transfer Mode (ATM) is a high speed network protocol composed of 53 byte "cells" having 5 byte headers and 48 byte payloads.

A DSLAM is a device placed in the CO multiplexing a network access, e.g. an ATM network, to DSL lines, hence terminating DSL lines. A CO is a switch that terminates all the access lines in a particular area, i.e. it could be identified with a physical building where the local switching equipment is found. xDSL lines running from a subscriber's home connect at their local CO.

DSL systems increasingly need to have the optical fiber in the vicinity of the subscriber location, because the enhanced bit-rates require shorter copper wire lines. VDSL e.g. is designed for wire line lengths between typically 300m and 1000m. Remote DSLAMs are typically used to shorten loop length, allowing for high bandwidth services like video over DSL.

Street side cabinets often impose power consumption and space requirements, which do not allow for complete modulation/de-modulation of the signals and the higher layer packet switching and multiplexing.

A remote DSLAM is currently architecturally identical to a CO DSLAM. Only mechanical packaging is optimized for small line number. Hence remote DSLAMs perform all the functions of the CO DSLAMs, which involves hardware and software that would not be required when hosted by a CO DSLAM.

A typical DSL line card of a remote DSLAM comprises multiple DSL modems that are typically composed of a digital part, an analogue part, and a software running on an embedded (digital signal) processor in digital ASIC. An ATM processor realizes the modem interface with the rest of the DSLAM system.

This remote unit is seen as a small DSLAM, containing all functions of a DSLAM, and consequently the associated costs and complexity. The remote unit is connected typically to the host system via a standard ATM interface (STM1).

This implies a need for significant space and power feeding in the remote units.

Miniaturization of the remote circuitry still does not solve the complexity problem. Complex equipment in the remote unit degrades the availability performance figures and blocks upgrades and reconfiguration of the transmission technique during the product active life.

To cope with the technical challenge designing a remote unit of low complexity one might use analog fiber feeder. But an analog fiber feeder is critical with respect to required carrier-to-noise ratio and leaves this approach uneconomical, especially for VDSL. This leads to a low number of VDSL signals per laser and hence a high effort for optical multiplexing or a reduced VDSL bit-rate.

In order to solve the problem the remote unit is realized by an analog transparent optical feeder system (front end) with advanced DSL spectrum digitization methods.

### BRIEF DESCRIPTION OF THE INVENTION

The invention is based on a DSL Network Interface Device having a decentralized architecture comprising a central unit and a remote unit. Starting from the typical DSLAM line card architecture where the DSL modem implementation typically consists of a digital part and an analog front end. The analog front end is removed and put on a remote unit. The interface between the digital part of the modem and the analog front end is a digital one. These DSL lines are multiplexed and transported over a fiber between the analog front end and the digital part.

A fiber extension is inserted between digital part and analog front end. The remote unit thus only consists of an electrical-to-optical converter and an analog front end. All intelligence stays in the CO DSLAM.

The invention appears in a **DSL Access System** for providing a plurality of DSLs comprising at least one DSLAM, realized by a central termination unit, a remote termination unit, and transmission network connecting the remote termination unit and central termination unit.

The invention is a **Remote DSL Termination Unit (DTU-R)** comprising an analog front end for each DSL line, converting DSL signals, a multiplexer/de-multiplexer unit for combining and separating multiple converted DSL signals, a network interface for transmitting and receiving for combined multiple converted DSL signals.

Furthermore is the invention a **Central DSL Termination Unit (DTU-C)** comprising a network interface for transmitting and receiving said combined multiple converted DSL signals, a multiplexer/de-multiplexer unit for combining and separating said multiple converted DSL signals, a digital back end for each DSL line, for modulating and de-modulating the converted DSL signal, and a line interface.

The transmission network transmitting the multiplexed converted DSL signals between the central termination unit and the remote termination unit.

The invention realizes a **DSL Access System** where
- The **DTU-R** further may comprise for upstream an analogue-to-digital converter per DSL line, digitizing modulated electrical DSL line signal, a signal processor per DSL line, converting the digitized electrical modulating DSL line signal, a multiplexer, combining the converted digitized electrical modulated DSL line signals, an electrical-to-optical converter, for framing and converting the multiplexed converted digitized electrical modulated DSL line signal into an optical signal. Where the transmission network transmitting the optical signal is a optical network.
- The **DTU-C** further may comprise for upstream an optical-to-electrical converter, converting and de-framing the optical signal into the multiplexed converted digitized electrical modulated DSL line signal, a de-multiplexer, separating the converted digitized electrical modulated DSL line signals, a signal processor per DSL line, converting and de-modulating the converted digitized electrical modulated DSL line signal for a line interface module.
- The **DTU-C** further may comprise for downstream a signal processor per line interface, modulating and converting digitized electrical DSL line signals, a multiplexer, combining the converted digitized electrical modulated DSL line signals, an optical-to-electrical converter, converting and framing the multiplexed converted digitized electrical modulated DSL line signal into an optical signal, and
- The **DTU-R** further may comprise for downstream an electrical-to-optical converter, de-framing and converting the optical signal into the multiplexed converted digitized electrical modulated DSL line signal, a de-multiplexer, separating the converted digitized electrical modulated DSL line signals, a signal processor per DSL line, converting the converted digitized electrical modulated DSL line signal for an analogue-to-digital converter per DSL line, converting the digitized electrical modulated DSL signal into a electrical modulated DSL signal.

Remote A/D and D/A conversion is combined with dedicated remote digital signal processing (DSP) algorithms for the xDSL signals, avoiding the necessity of computationally complex discrete multi-tone (DMT) modulation/de-modulation at the remote unit.

Analog to digital conversion (up-stream) as well as digital to analog conversion (downstream) is performed by the remote unit. (In the central office, the conversion to/from the analog domain is thus no more required.)

It is an embodiment of the invention to realize the **DSL Access System** for providing a plurality of Digital Subscriber Lines comprising at least one **DSLAM**,
- where the **DTU-R'**s DSP comprising for upstream a up-sampling unit, followed by a RF ingress cancellation, followed by a band-pass pair, followed by a down converter per split path (optional), an adding unit, and followed by a heavy down sampling unit (optional) and an optional nonlinear quantization compression, and
- where the **DTU-C**'s DSP comprising for upstream an optional nonlinear quantization compression, followed by a heavy up-sampling unit, followed by a band-pass pair, followed by a down converter per split path (optional), an adding unit, and followed by a down sampling unit (optional), and
- where the **DTU-R'**s DSP comprising for downstream an optional nonlinear quantization compression, followed by an optional heavy up-sampling unit, followed by a band-pass pair, followed by an equalizer (optional) and a down converter per split path (optional), an adding unit, and followed by a down sampling unit (optional), and
- where the **DTU-C'**s DSP comprising for downstream an up-sampling unit, followed by a equalizer (optional), followed by a band-pass pair, followed by a down converter per split path (optional), an adding unit, and followed by a heavy down sampling unit (optional) and an optional nonlinear quantization compression.

### OBJECTS AND ADVANTAGES OF THE INVENTION

Accordingly, it is an object and advantage of the present invention to simplify the design of the remote unit to reduce the operational expenditure. A reduction in functionality, leading to a reduction of capital expenditure (depending on evolution of fiber technology) as well as operational expenditure (no software, more reliable design) for the operator.

The design is space and power efficient, enabling VDSL and other high bit-rate DSL in small street side cabinets with severe power and space restrictions.

Another advantage of the present invention is that reduction in functionality at the remote unit results in a gain of flexibility by re-configurability.

A further advantage of the present invention is that this invention allows to deploy VDSL in regions, where the distance from subscriber to the central office or the power and space limitations of the cabinet previously have been prohibitive.

These and many other objects and advantages of the present invention will become apparent to those of ordinary skill in the art from a consideration of the drawings and ensuing description.

### BRIEF DESCRIPTION OF THE FIGURES

**Figure. 1** is a schematic drawing of a prior art showing a standard DSL network topology.
**Figure. 2** is a schematic drawing of prior art a typical DSLAM architecture, showing the interface split possibilities.
**Figure. 3** is a schematic drawing of prior art showing a typical DTU-C/DTU-R architecture.
**Figure. 4** is a schematic drawing comparing the prior art network interface architecture with the network interface architecture according to the invention.
**Figure. 5** is a schematic drawing of an applied network interface architecture on a typical DSLAM architecture, according to the invention.
**Figure. 6** shows typical spectra of a physical DSL line for upstream and downstream at a cabinet and at the subscriber.
**Figure. 7** is a schematic drawing of the design of a remote termination unit upstream part of a DSLAM.
**Figure. 8** is a schematic drawing of the design of a remote termination unit downstream part of a DSLAM.
**Figure. 9** is a schematic drawing of the design of a central termination unit downstream part of a DSLAM.
**Figure. 10** is a schematic drawing of the design of a central termination unit upstream part of a DSLAM.

### DETAILED DESCRIPTION OF THE INVENTION

Those of ordinary skill in the art will realize that the following description of the present invention is illustrative only and is not intended to be in any way limiting. Other embodiments of the invention will readily suggest themselves to such skilled persons from an examination of the within disclosure.

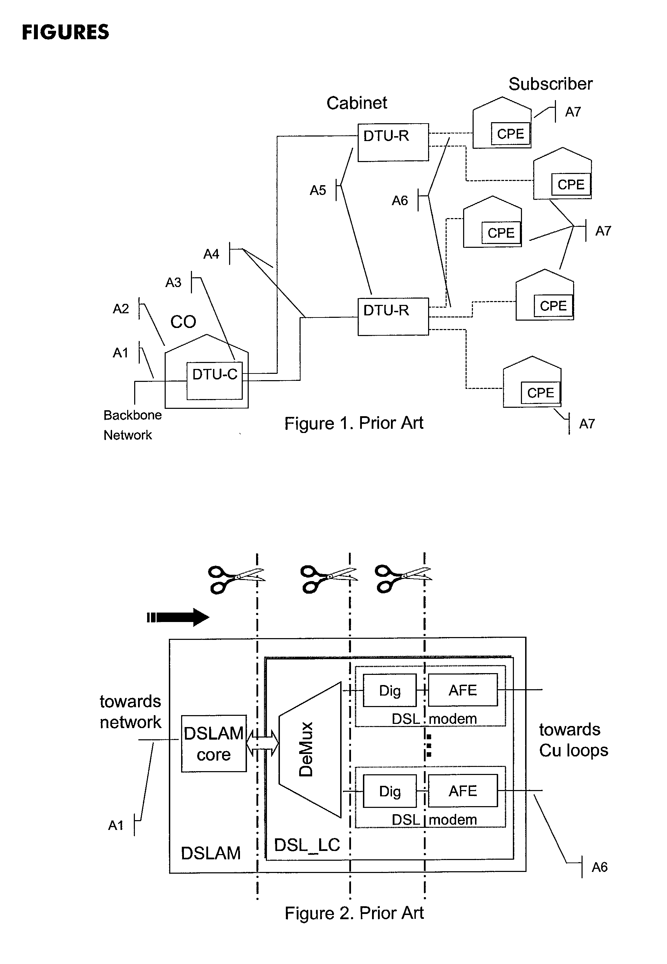

**Figure. 1** shows a DSL access network, comprising a connection A1 to a Backbone Network, a Central Office CO A2 with a DTU-C A3, connected with multiple DTU-Rs A5 via connection network A4. The DTU-Rs A5 in street cabinets are itself connected to customers' premises equipment CPE at the subscribers Subscriber via physical DSL lines A6.

The figure shows the standard configuration of a DSL access network where the telephone line infra structure, i.e. the physical DSL lines, is re-used for a high speed data connection. The DTU-C A3 and the DTUS-Rs are in the role of DSLAMs.

**Figure. 2** shows a DSLAM, today located in a central office. The DSLAM comprises a DSLAM core and DSL line cards DSL_LC, each having an multiplexer/de-multiplexer DeMux connected with multiple DSL modems DSL_modems. Each DSL modem DSL_modem comprises an digital part Dig connected with an analog front end AFE, each serving a physical DSL line A6.

The DSLAM core controls each DSL line and has an interface to each multiplexer/demultiplexer DeMux. This multiplexing is often realized by ATM processors.

The vertical dashed lines illustrate possibilities to split the DSLAM by parting an interface.

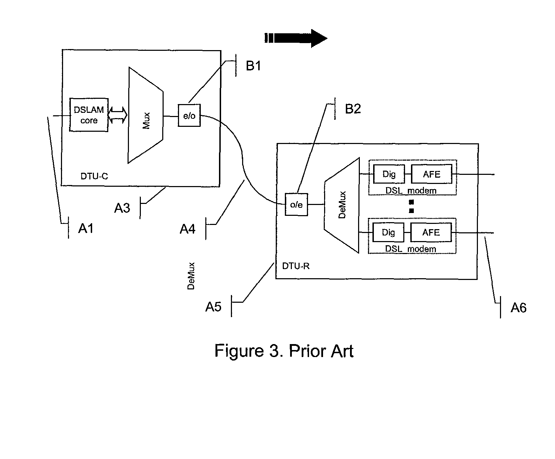

**Figure. 3** shows a detailed view of the downstream part of the DTU-C A3 and a DTU-R A5, indicated by the arrow, inter-connected by a part of the connection network A4. The DTU-C A3 comprises a controller DSLAM core controlling the DSL lines as well as a multiplexer Mux and a electrical-to-optical converter B1. The DSLAM core is connected with the Backbone Network via the connection A1.

The DTU-R A5 comprises dually, an optical-to-electrical converter B2 and a de-multiplexer DeMux connected with multiple DSL modems DSL_modem. Each DSL modem DSL_modem comprises a digital part Dig connected with an analog front end AFE supporting a physical DSL line A6.

Each DTU-R A5 supports multiple physical DSL lines A6 by the DSL modems DSL_modem. The controller DSLAM core together with the multiplexer Mux and de-multiplexer DeMux route the data from the Backbone Network to the single DSL modems, DSL_modem. Hence enabling a DSL client receiving data from the Backbone Network. For multiplexing and transmission between DTU-C and DTU-R ATM could be used.

The upstream part is designed and works correspondingly dually.

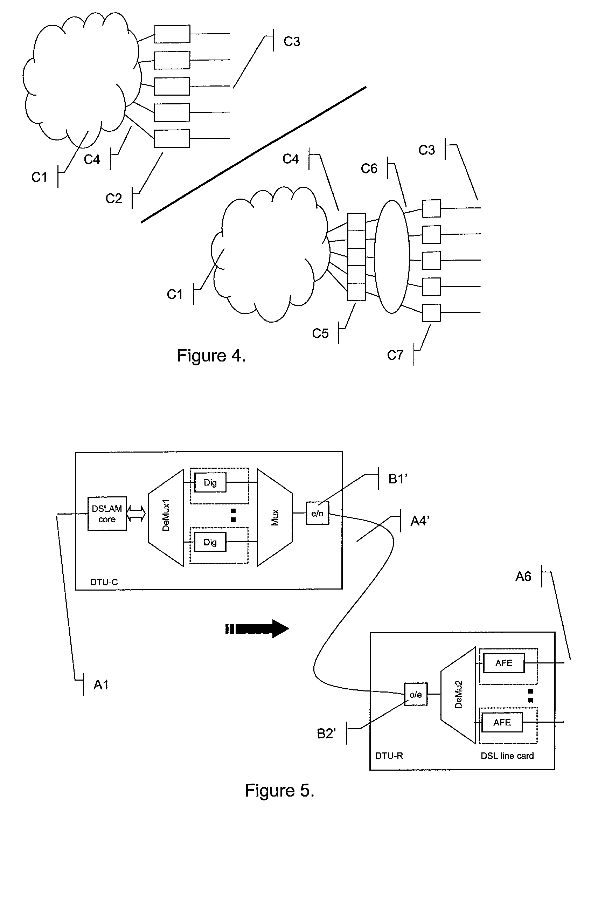

**Figure. 4** shows the principle idea of the invention. Interface devices C2 connected with a network C1 via connections C4 allowing access for each line C3. It is a part of the invention to split the interfaces C2 into an back end C5 and a front end C7, and to separate the two interfaces, connecting them aggregated via a additional network C6. The front ends C7 provide the lines and the back ends are connected to the network C1. The split of the interface should not affect the interface functionality.

**Figure. 5** shows the invention resulting from applying the principle idea on the DSL access network scenario. The picture shows a detailed view of the downstream part of a DTU-C and a DTU-R, indicated by the arrow, inter-connected by an optical network A4'.

The DTU-C comprising the controller DSLAM core for controlling each DSL line. The connection A1 to the Backbone Network is de-multiplexed by a de-multiplexer DeMux1 on the digital part Dig of DSL modems, one for each DSL line. The outputs are multiplexed on one connection by the multiplexer Mux. This electrical sum signal is converted into an optical one, i.e. a optical transmission network A4', by an electrical-to-optical converter.

The multiplexed DSL line signals are transmitted over the transmission network interconnecting the digital part Dig with the analog front end AFE of each of the split DSL modems.

The DTU-R comprises dually an optical-to-electrical converter and a de-multiplexer DeMux2. The de-multiplexer DeMux2 is connected to the analog front end AFE of the DSL modems. These parts serve the physical DSL lines.

The upstream part is designed and works correspondingly dually.

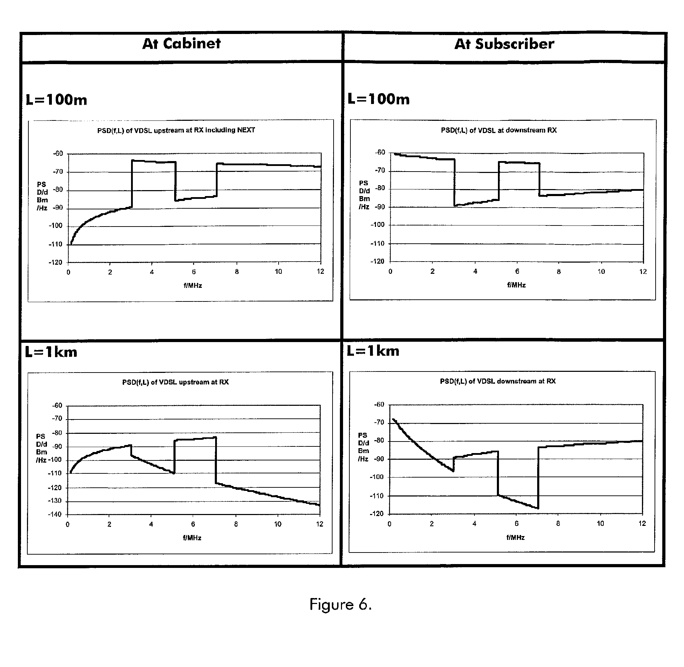

**Figure. 6** shows typical examples of spectra of a physical VDSL line (upstream and downstream) at a cabinet and at the subscriber.

The signal spectra for upstream and downstream channels are separated into windows. The upstream spectra have contributions in the band between 3 and 5 MHz and from 7 MHz. The downstream spectra have contributions in the complementary band between 0 and 3 MHz and between 5 MHz and 7 MHz. The picture shows the effect of attenuation at both ends of a local loop, i.e. at the cabinet and at the subscriber for a length of 100m and 1000m.

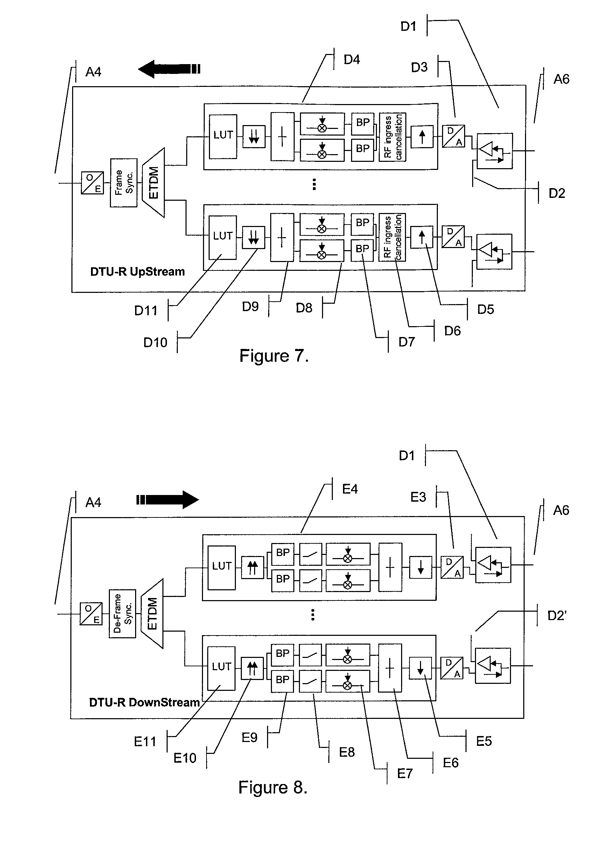

**Figure. 7** shows a detailed view of an upstream part DTU-R UpStream of a DTU-R comprising electrical and optical components. The upstream part consists per DSL line of a directional separator D1 for upstream and downstream, connected to the local loop (physical DSL line), for feeding the extracted upstream signal to a analog-to-digital converter D3, and capable of injecting the downstream D2'. The analog-to-digital converter is for feeding a digital signal processor (DSP) D4. The output signals of the signal processors are multiplexed by a electric time division multiplexer ETDM. The succeeding frame synchronization Frame Sync. adds a frame and the electrical-to-optical converter converts the multiplexed DSL line signals for the optical connection A4' to the DTU-C.

Each DSP D4 comprises an up-sampling unit D5, for increasing sampling rate and filtering, a RF ingress cancellation D6 for suppression of RF interferes, a band-pass pair D7 realizing a frequency split for up- and down signal windows for filtering for suppression of Near End Cross-Talk (NEXT) and Far End Cross-Talk (FEXT), and, optionally reduction of system load using a down converter D8, as well as for gap elimination, an adding unit D9 for integrating the two split and transformed signals, followed optionally by a heavy down sampling unit D10 for spectral compression of payload and down-sampling, as well as an optional nonlinear quantization compression, e.g. realized by a look up table LUT D11.

Each of the up-stream DSL spectra, shown in Figure 6 is digitized including the respective Additive White Gaussian Noise (AWGN), FEXT, NEXT, and RF Interference (RFI). In the most simple approach a plurality of such digitized spectra are transmitted via Electrical Time Division Multiplexing (ETDM) and high bit-rate optical transmission systems.

The efficiency, i.e. the number of DSL lines per optical feeder, can be increased by appropriately processing the digitized signal to remove redundancy. Optional processing algorithms are:
- Digital filtering of NEXT and FEXT, which is out-of-band, for reduction of transmitted signal load
- Digital filtering of RF interferes
- Spectral rearrangement of the DSL frequency bands eliminating spectral range without payload data. This can be achieved by digital mixers or by sampling rate converters.
- Sampling rate conversion, especially down-sampling for transmission bit-rate reduction
- Nonlinear compression (nonlinear quantization) in the digital domain
Moreover, over-sampling analog-to-digital converters and digital-to-analog converters as well as quantization noise shaping can be applied.

Re-de-emphasis for optimum spectral shaping in terms of transmission bit-rate in the central office is a feature of the shown realization. Equalization and consecutive digital filtering is used for suppression of shaped quantization noise, which would occur as in-band NEXT.

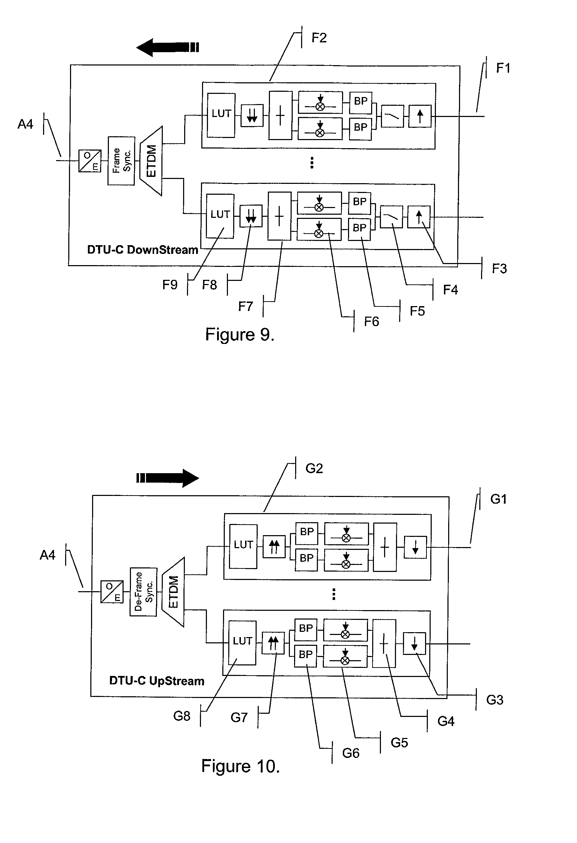

In the central office the digital processing is reversed (disclosed below with reference to figure 10), where needed, and the original signal spectra are retrieved for further processing in the DSL line interface module cards, which do not need an analog-to-digital converter anymore.

**Figure. 8** shows a detailed view of an downstream part DTU-R DownStream of a DTU-R comprising electrical and optical components. The downstream part consists of optical-to-electrical converter feeding a de-framing and synchronization unit De-Frame Sync. That is connected with a electric time division de-multiplexer ETDM, de-multiplexing the DSL line signals. For each DSL line there is a DSP E4, feed by a de-multiplexed signal and feeding a digital-to-analog converter E3, that is connected to the directional separator D1 for upstream and downstream separation via the connection D2 in Figure 7.

The DSP E4 comprises spectral compression of payload and down-sampling (optional), as well as a nonlinear quantization compression (optional), e.g. realized by a look up table LUT E11, followed by a heavy up sampling unit E10 for a band-pass pair E9 realizing a frequency split for up- and down signal windows for filtering for suppression of NEXT and FEXT and, reduction of system load (optional) using equalizer E8 for optimizing with respect to signal to noise ratio by adapted the amplification to the statistic of the frequency attenuation a down converter E7, as well as for gap elimination, an adding unit E6 integrating the two split and transformed signals for a down sampling unit E5.

In the downstream direction, correspondingly, no conversion to the analog domain is performed in the central office. A pre-de-emphasis of the digital VDSL signal received from the DSL line interface module card in the central office is an effective way to reduce downstream bit-rate per DSL signal by decreasing signal load in those spectral ranges, where more quantization noise can be tolerated. In the cabinet the signal emphasis is removed and out-of-band noise is filtered. Thus, this noise is avoided to become detrimental for the upstream as NEXT, which would be in-band for this upstream signal. In addition to that, all of the digital processing algorithms used in the upstream can be applied.

**Figure. 9** shows a detailed view of downstream part DTU-C DownStream comprising electrical and optical components. The downstream part consists of DSL line interfaces F1 from a modulator to a DSP F2 for each DSL line, feeding an electronic time division multiplexer ETDM. In the frame synchronization unit Frame Sync. a frame is added to the multiplexed signal for an electrical-to-optical converter that is connected to the optical transmission A4.

The DSP F2 corresponds to the DSP E4. It comprises an up-sampling unit F4, for increasing sampling rate and filtering, followed by an (optional) equalizer E8 for optimizing with respect to signal to noise ratio by adapted the amplification to the statistic of the frequency attenuation. A band-pass pair F5 realizing a frequency split for up- and down signal windows for filtering for suppression of NEXT and FEXT, and reduction of system load (optional) using a down converter F6, as well as for gap elimination, an adding unit F7 integrating the two split and transformed signals, followed by a heavy down sampling unit F8 for spectral compression of payload and down-sampling (optional), as well as a nonlinear quantization compression (optional), e.g. realized by a look up table LUT F9.

**Figure. 10** shows a detailed view of upstream part DTU-C UpStream with electrical and optical components. The upstream part consists of an optical-to-electrical converter connected to the optical transmission A4, followed by a de-framing and synchronization unit De-Frame Sync. and an electric time division multiplexer ETDM, feeding a DSP G2 that is interfacing a de-modulator G1.

The DSP G2 comprises of spectral compression of payload and down-sampling (optional), as well as a nonlinear quantization compression (optional), e.g. realized by a look up table LUT G8, followed by a heavy up sampling unit G7 for a band-pass pair G6 realizing a frequency split for up- and down signal windows for filtering for suppression of NEXT and FEXT, and reduction of system load (optional) using a down converter G5 for gap elimination, an adding unit G4 integrating the two split and transformed signals for a down sampling unit G3.

### Alternative Embodiments

Although illustrative presently preferred embodiments and applications of this invention are shown and described herein, many variations and modifications are possible which remain within the concept, scope, and spirit of the invention, and these variations would become clear to those of skill in the art after perusal of this application.

A further increase of DSL line numbers per optical fiber can be achieved by means of wavelength multiplexing, e.g. Coarse Wavelength Division Multiplexing (CWDM), Dense Wavelength Division Multiplexing (DWDM).

All of the DSP can be re-configurable by download in order to adapt for other DSL standards.

The invention can be used with any type of network functionality aggregation or network media. The invention, therefore, is not intended to be limited except in the spirit of the appended claims.

## Claims

1. A Digital Subscriber Line (DSL) Access System for providing a plurality of Digital Subscriber Lines (A6) comprising at least one Digital Subscriber Line Access Multiplexer (DSLAM) realized by a DSL Central Termination Unit (DTU-C), at least one DSL Remote Termination Unit (DTU-R), and transmission network (A4, A4') connecting the DTU-Cs and the at least one DTU-R,
- where the at least one DTU-R comprising
- an analog front end (AFE) for each of the plurality of DSL lines, for converting DSL signals,
- a multiplexer/de-multiplexer (DeMux2, Fig5.) unit for combining and separating multiple converted DSL signals,
- a network interface for transmitting and receiving for combined multiple converted DSL signals, and
- where the transmission network (A4, A4') transmitting said combined multiple converted DSL signals, and
- where a DTU-C comprising
- a network interface for transmitting and receiving said combined multiple converted DSL signals,
- a multiplexer/de-multiplexer unit (Mux, Fig. 5) for combining and separating said multiple converted DSL signals, and
- a digital back end (Dig) for each DSL line, for modulating and de-modulating the converted DSL signal, and
- a line interface.

2. A **DSL Remote Termination Unit (DTU-R)** for a DSL Access System comprising
- at least one analog front end (AFE) for each DSL line, for converting DSL signals,
- a multiplexer/de-multiplexer unit (DeMux2, Fig. 5) for combining and separating multiple converted DSL signals, and
- a network interface for transmitting and receiving combined multiple converted DSL signals.

3. A **DSL Central Termination Unit (DTU-C)** for a DSL Access System comprising
- a network interface for transmitting and receiving combined multiple converted DSL signals,
- a multiplexer/de-multiplexer unit (Mux, Fig. 5) for combining and separating said multiple converted DSL signals,
- a digital back end (Dig) for each DSL line, for modulating and de-modulating converted DSL signal, and
- a line interface.

4. The **DSL Access System** for providing a plurality of Digital Subscriber Lines comprising at least one DSLAM as in Claim 1, where the DSL Remote Termination Unit (DTU-R) comprising for upstream
- an analogue-to-digital converter (D3) for each DSL line, for digitizing modulated electrical DSL line signal,
- a signal processor per DSL line (D4), for converting the digitized electrical modulating DSL line signal,
- a multiplexer (ETDM, Fig. 7), for combining the converted digitized electrical modulated DSL line signals,
- an electrical-to-optical converter, for framing and converting the multiplexed converted digitized electrical modulated DSL line signal into an optical signal,
where said transmission network (A4, A4') is a optical network, transmitting said optical signal, and
where the (DSL Central Termination Unit) DTU-C comprising for upstream
- an optical-to-electrical converter, for converting and de-framing the optical signal into the multiplexed converted digitized electrical modulated DSL line signal
- a de-multiplexer (ETDM, Fig. 10), for separating the converted digitized electrical modulated DSL line signals,
- a signal processor (G2) for each DSL line, for converting and de-modulating the converted digitized electrical modulated DSL line signal for a line interface module, and
where the DTU-C comprising for downstream
- a signal processor (F2) for each line interface, for modulating and converting digitized electrical DSL line signals,
- a multiplexer (ETDM, Fig. 9), for combining the converted digitized electrical modulated DSL line signals,
- an optical-to-electrical converter, for converting and framing the multiplexed converted digitized electrical modulated DSL line signal into an optical signal, and
where the DTU-R comprising for downstream
- an electrical-to-optical converter, for de-framing and converting the optical signal into the multiplexed converted digitized electrical modulated DSL line signal,
- a de-multiplexer (ETDM, Fig. 8), for separating the converted digitized electrical modulated DSL line signals,
- a signal processor (E4) for each DSL line, for converting the converted digitized electrical modulated DSL line signal for
- an digital-to-analog converter (E3) for each DSL line, for converting the digitized electrical modulated DSL signal into a electrical modulated DSL signal.

5. The **DTU-R** as claimed in Claim 2. comprising for upstream
- an analogue-to-digital converter (D3) for each DSL line, digitizing modulated electrical DSL line signal,
- a signal processor for each DSL line (D4), for converting the digitized electrical modulating DSL line signal,
- a multiplexer (ETDM, Fig. 7), for combining the converted digitized electrical modulated DSL line signals,
- an electrical-to-optical converter, for framing and converting the multiplexed converted digitized electrical modulated DSL line signal into an optical signal,
and where said remote termination unit comprising for downstream
- an electrical-to-optical converter, for de-framing and converting the optical signal into the multiplexed converted digitized electrical modulated DSL line signal,
- a de-multiplexer (ETDM, Fig. 8), for separating the converted digitized electrical modulated DSL line signals,
- a signal processor (E4) for each DSL line, for converting the converted digitized electrical modulated DSL line signal for
- an digital-to-analog converter (E3) for each DSL line, converting the digitized electrical modulated DSL signal into a electrical modulated DSL signal.

6. The **DTU-C** as in Claim 3. comprising for upstream,
- an optical-to-electrical converter, for converting and de-framing the optical signal into the multiplexed converted digitized electrical modulated DSL line signal
- a de-multiplexer (ETDM, Fig. 10), for separating the converted digitized electrical modulated DSL line signals,
- a signal processor (G2) for each DSL line, for converting and de-modulating the converted digitized electrical modulated DSL line signal for a line interface module, and
where said central termination unit comprising for downstream
- a signal processor (F2) for each line interface, for modulating and converting digitized electrical DSL line signals,
- a multiplexer (ETDM, Fig. 9), for combining the converted digitized electrical modulated DSL line signals,
- an optical-to-electrical converter, for converting and framing the multiplexed converted digitized electrical modulated DSL line signal into an optical signal.

7. The **DSL Access System** for providing a plurality of Digital Subscriber Lines comprising at least one DSLAM as in Claim 4.,
- where the DTU-R's Digital Signaling Processor (DSP) (D4) comprising for upstream a up-sampling unit (D5), followed by a RF ingress cancellation unit (D6), followed by a band-pass pair (D7), followed by a down converter (D8) for each split path (optional), an adding unit (D9), and followed by a heavy down sampling unit (D10) (optional), and an optional nonlinear quantization compression unit (D11), and
- where the DTU-C's DSP (G2) comprising for upstream an optional nonlinear quantization compression unit (G8), followed by a heavy up-sampling unit (G7), followed by a band-pass pair (G6), followed by a down converter (G5) for each split path (optional), an adding unit (G4), and followed by a down sampling unit (G3) (optional), and
- where the DTU-R's DSP (E4) comprising for downstream an optional nonlinear quantization compression unit (E11), followed by a heavy up-sampling unit (E10), followed by a band-pass pair (E9), followed by an equalizer (E8) (optional), and a down converter (E7) for each split path (optional), an adding unit (E6), and followed by a down sampling unit (E5) (optional), and
- where the DTU-C's DSP (F2) comprising for downstream an up-sampling unit (F3), followed by a equalizer (F4) (optional), followed by a band-pass pair (F5), followed by a down converter (F6) for each split path (optional), an adding unit (F7), and followed by a heavy down sampling unit (F8) (optional) and an optional nonlinear quantization compression unit (F9).

8. The **DTU-R** as claimed in Claim 5.,
- where the DTU-R's DSP (D4) comprising for upstream a up-sampling unit (D5), followed by a RF ingress cancellation unit (D6), followed by a band-pass pair (D7), followed by a down converter (D8) for each split path (optional), an adding unit (D9), and followed by a heavy down sampling unit (D10) (optional), and an optional nonlinear quantization compression unit (D11), and
- where the DTU-R's DSP (E4) comprising for downstream an optional nonlinear quantization compression unit (E11 ), followed by a heavy up-sampling unit (E10), followed by a band-pass pair (E9), followed by an equalizer (E8) (optional), and a down converter (E7) for each split path (optional), an adding unit (E6), and followed by a down sampling unit (E5) (optional), and

9. The **DTU-C** as in Claim 6.,
- where the DTU-C's DSP (G2) comprising for upstream an optional nonlinear quantization compression unit (G8), followed by a heavy up-sampling unit (G7), followed by a band-pass pair (G6), followed by a down converter (G5) for each split path (optional), an adding unit (G4), and followed by a down sampling unit (G3) (optional), and
- where the DTU-C's DSP (F2) comprising for downstream an up-sampling unit (F3), followed by a equalizer (F4) (optional), followed by a band-pass pair (F5), followed by a down converter (F6) for each split path (optional), an adding unit (F7), and followed by a heavy down sampling unit (F8) (optional) and an optional nonlinear quantization compression unit (F9).
